# EUROPEAN PATENT APPLICATION

(11) **EP 2 871 784 A2**
(43) Date of publication of application: **13.05.2015**
(21) Application number: 14189780.1
(22) Date of filing: 21.10.2014
(51) Int. Cl.: H04B 7/155, H04M 1/60

(54) **Wireless relay module and hands-free system**

(30) Priority: 06.11.2013 JP 2013230479
(71) Applicant: Hosiden Corporation, Yao-shi, Osaka 581-0071 (JP)
(72) Inventor: Miyazawa, Kiyoshi, Osaka, Osaka 5810071 (JP); Muraoka, Shunji, Osaka, Osaka 5810071 (JP)
(74) Representative: Lemcke, Brommer & Partner Patentanwälte Partnerschaft mbB

(57) **Abstract**

A wireless relay module (1) that relays communication between a first device (2) and a second device (3) includes a wireless relay section (11) handling wireless communication with the first device (2), and a wire relay section (12) handling digital wire communication with the second device (3).

## Description

### TECHNICAL FILED

This disclosure relates to a wireless communication technique between devices.

### RELATED ART

As the wireless communication technique including Bluetooth (TM) has recently been developed, it has been proposed to operate a device or have two devices cooperated with each other with such a wireless communication technique.

For example, Japanese Unexamined Patent Application Publication No. 2013-168845 discloses an onboard hands-free device connected to a terminal device through Bluetooth. The onboard hands-free device is provided with a speaker and a microphone. When a call is received at a mobile phone (terminal device) and hands-free communication is started, incoming voice received at the mobile phone is transmitted to a communication interface of the onboard hands-free device and outputted from the speaker. Meanwhile, outgoing voice inputted from the microphone is transmitted to the mobile phone from the communication interface of the onboard hands-free device, and then to the other side.

### SUMMARY

As described above, the hands-free device disclosed in Japanese Unexamined Patent Application Publication No. 2013-168845 allows hands-free communication through the terminal device. On the other hand, the onboard hands-free device according to this Japanese reference is for exclusive use, and thus would be mounted in addition to an audio device or a car navigation system that has already been mounted to a vehicle. As a result, space for installing those onboard devices needs to be increased, which might restrict a passengers' space. In addition, the limited space for installing the onboard devices might make it difficult to install the onboard hands-free device.

The above disadvantage would be overcome by incorporating the onboard hands-free device into a car audio system or a car navigation system. In this, however, the onboard hands-free device according to Japanese Unexamined Patent Application Publication No. 2013-168845 is equipped with a software stack for Bluetooth in a BT communication interface section, and thus requires a relatively high-performance processor for the software stack.

For the above reason, it is possible to incorporate the onboard hands-free device according to Japanese Unexamined Patent Application Publication No. 2013-168845 to a car navigation system or the like equipped with a high-performance processor, but not to a conventional car audio system with no such processor. If the onboard hands-free device according to the above Japanese reference is incorporated, a high-performance processor is required, which disadvantageously increases the cost.

Preferred embodiments of the present invention discloses a wireless relay module that can achieve communication between devices in a relatively economical way.

A preferred embodiment of a wireless relay module according to the present invention, which relays communication between a first device and a second device, includes a wireless relay section handling wireless communication with the first device, and a wire relay section handling digital wire communication with the second device.

With the above arrangement, the wireless relay module handles the wireless communication with the first device and handles the digital wire communication with the second device. Since the wireless relay module takes care of processing for the wireless communication having relatively high throughput like Bluetooth, for example, the second device can handle only the digital wire communication. This can reduce load of processing for the communication with the second device. As a result, even the second device with no high-performance processor can establish the wireless communication with the first device.

Further, when different types of second devices are provided with wireless communication function, authorization for the wireless communication is required for each of the second devices. With the wireless relay module of the current embodiment, it is only required to obtain authorization for the wireless relay module, and not required to obtain authorization for the second device(s). As a result, a burden of a person manufacturing the second device can be reduced.

When the wireless rely module of the current embodiment is used, the wireless communication and the wire communication are performed close to each other. Therefore, a communication cable used for the wire communication may pick up a radio wave of the wireless communication, and such a wave might be noise for the wire communication. In view of this, according to a preferred embodiment of the wireless relay module of the present invention, the wire relay section includes a noise suppressing section that attenuates a signal with a frequency band of the wireless communication without attenuating a signal with a frequency band of the digital wire communication.

With the above arrangement, since the noise suppressing section of the wire relay section attenuates a signal with the frequency band used in the wireless communication, even if the communication cable used for the wire communication receives a radio wave of the wireless communication, it is possible to prevent the received radio wave from affecting the signal of the wire communication as noise. Meanwhile, since the noise suppressing section does not attenuate a signal with the frequency band used in the wire communication, a high S/N ratio can be maintained. It should be noted that the expression "does not attenuate" means not only the case where the signal does not attenuate at all but also the case where the signal attenuates to such a degree that the wire communication is not adversely affected.

According to a preferred embodiment of the wireless relay module of the present invention, in which the wire relay section further includes a power terminal and a ground terminal, the noise suppressing section is connected to the power terminal and the ground terminal, and formed of inductance providing high impedance against the signal with the frequency band of the wireless communication and providing low impedance against the signal with the frequency band of the digital wire communication or a direct current signal.

The wireless relay module of the present invention according to a preferred embodiment further includes a rectangular module substrate on which the wire relay section is arranged, the module substrate having a lengthwise dimension and a widthwise dimension of λ/4 and λ/2 in electrical length relative to a wavelength λ in the module substrate of a radio wave used in the wireless communication.

By determining the size of the module substrate in the above-noted manner, the wireless relay section can enhance a radiant efficiency of the antenna used in the wireless communication, thereby to improve the quality of communication.

When the first device is represented by a communication device such as a mobile phone, a microphone provided in the wireless relay module and a speaker provided in the second device can form a hands-free system together. In such a case, the microphone of the wireless relay module might collect not only outgoing voice of the user but also voice outputted from the speaker of the second device, as a result of which the undesirable voice is superimposed to the outgoing voice to deteriorate the quality of communication. In view of this, according to a preferred embodiment of the wireless relay module of the present invention, the wire relay section is configured to receive data of voice from the second device, the voice being about to be outputted from the speaker of the second device, and a voice data correcting section is provided for correcting the data of the voice outputted from the speaker of the second device and collected at the microphone based on the voice data received from the second device.

With the above arrangement, while the data of the voice that is about to be outputted from the speaker of the second device is transmitted to the wireless relay module through the digital wire communication, the voice data correcting section in the wireless relay module corrects the data of the voice outputted from the speaker of the second device and collected at the microphone based on the transmitted voice data. As a result, it is suppressed that the quality of communication is deteriorated. The voice data used for correction of the data of the collected voice is the voice data (digital data) itself that causes the deterioration of the quality of communication, which can achieve the correction of the voice data with high accuracy. Further, it is only required that the second device is additionally provided with such function of transmitting the voice data, and not required that any special structure is provided for obtaining voice data causing the deterioration of the quality of communication. As a result, the data correcting function can be provided economically.

The present invention also covers a hands-free system. A preferred embodiment of the hands-free system according to the present invention includes a voice output device, and a wireless relay module relaying communication between the voice output device and a communication device. The voice output device includes a speaker outputting voice, and a wire communication section handling digital wire communication with the wireless relay module. The wireless relay module includes a wireless relay section handling wireless communication with the communication device, a wire relay section handling digital wire communication with the voice output device; a microphone, and a voice data correcting section correcting data of voice collected at the microphone. The voice output device transmits the voice data to the wireless relay module when the voice data is outputted from the speaker as voice, and the voice data correcting section corrects the data of the voice outputted from the speaker and collected at the microphone based on the voice data obtained from the voice output device.

Such a hands-free system also achieves the same effects as in the wireless relay module described above. Further, such a hands-free system may be provided with the additional structures for the wireless relay module described above.

### BRIEF DESCRIPTION OF DRAWINGS

Fig. 1 is a block diagram showing a structure and a function of a hands-free system with a wireless relay module;
Fig. 2 is a schematic top-side perspective view of the wireless relay module;
Fig. 3 is a schematic bottom-side perspective view of the wireless relay module;
Fig. 4 is a circuit diagram of a USB circuit;
Fig. 5 is a flowchart of processing of replaying incoming voice with a hands-free system;
Fig. 6 is a flowchart of processing of transmitting outgoing voice with the hands-free system; and
Fig. 7 is a flowchart of voice correcting processing in the hands-free system.

### DESCRIPTION OF EMBODIMENTS

Embodiments of a hands-free system with a wireless relay module will be described hereinafter with reference to the accompanying drawings. According to the current embodiment, the hands-free system connects a communication device to a car audio system through a wireless relay module.

### [Overall Construction]

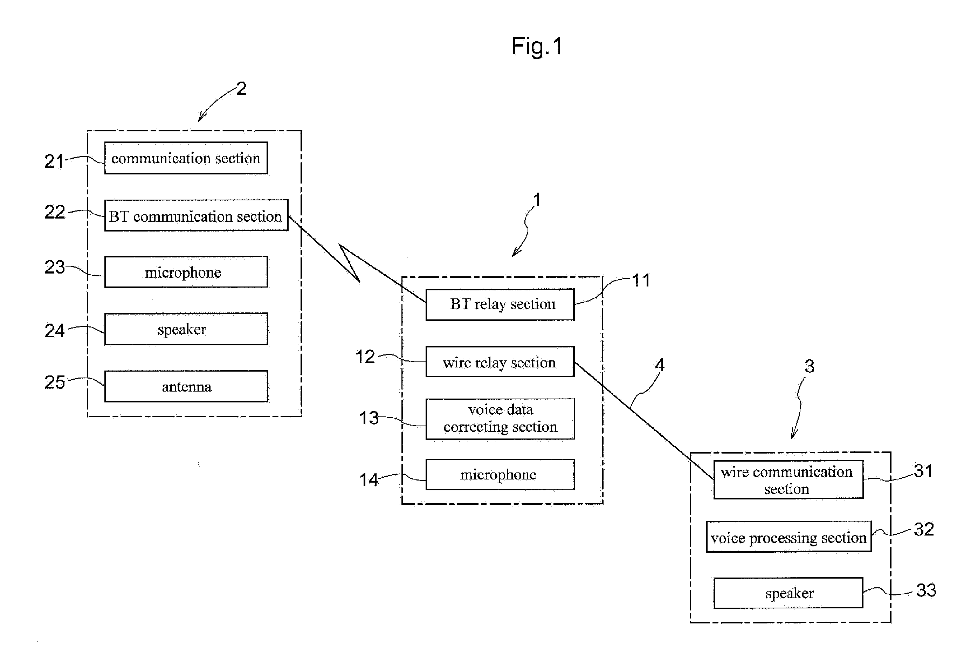

Fig. 1 is a block diagram showing a structure and a function of the hands-free system. As illustrated, the hands-free system includes the wireless relay module 1, the communication device 2 (an example of a first device), and the car audio system 3 (an example of a second device or a voice output device). The communication device 2 and the wireless relay module 1 are connected to each other through wireless communication. While the current embodiment employs Bluetooth (TM) as wireless communication standard, any other wireless communication standard such as Wi-Fi may be used. Meanwhile, the wireless relay module 1 and the car audio system 3 are digitally wire-connected to each other. While the current embodiment employs a USB (Universal Serial Bus) as digital communication standard, any other digital communication standard may be used.

### [Communication Device]

The communication device 2 in the current embodiment is represented by a typical mobile phone or smart phone having a Bluetooth communication function. The communication device 2 includes a communication section 21, a BT communication section 22, a microphone 23, a speaker 24 and an antenna 25.

While the communication section 21 has a function for connecting to a mobile phone network through the antenna 25, the BT communication section 22 has a function for communicating with another device through Bluetooth. During usual communication, outgoing voice of a user is inputted to the device through the microphone 23 and then transmitted to the mobile phone network from the communication section 21 through the antenna 25. Incoming voice from the other side is received at the communication section 21 through the antenna 25 and outputted from the speaker 24. On the other hand, during hands-free communication, the communication device 2, the wireless relay module 1 and the car audio system 3 cooperate with one another through the BT communication section 22. Details of the hands-free communication will be described later.

### [Car Audio System]

The car audio system 3 includes a wire communication section 31, a voice processing section 32, and a speaker 33. The wire communication section 31 handles wire USB communication with the wireless relay module 1 that will be described later. The voice processing section 32 handles voice processing as a usual car audio system or processing of voice data received from the wireless relay module 1. The voice that has been processed at the voice processing section 32 is outputted from the speaker 33.

The car audio system 3 may be a device with a high-performance processor such as a car navigation system, or a device with no high-performance processor such as a radio or a CD player.

### [Wireless Relay Module]

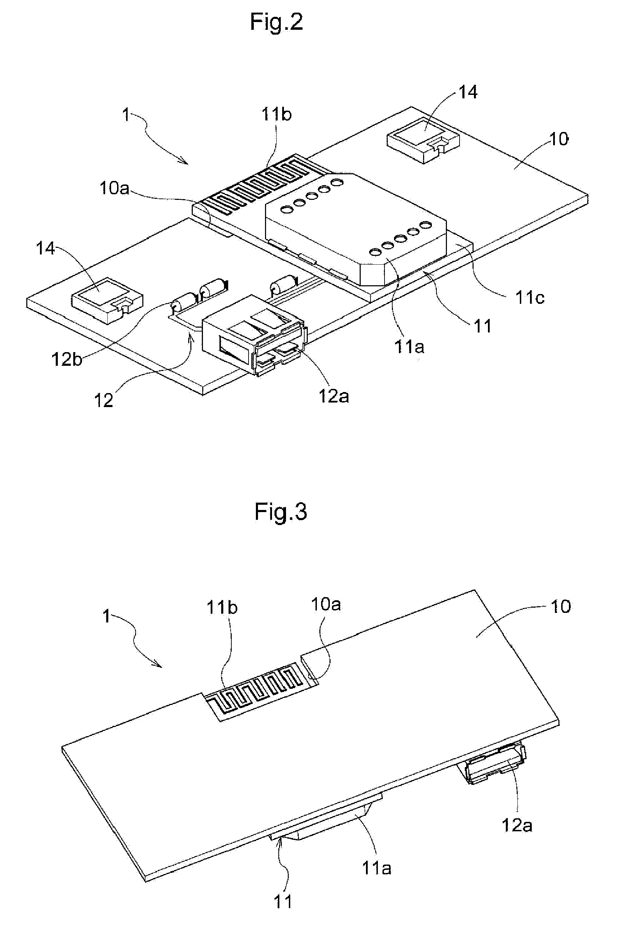

Fig. 2 is a schematic top-side perspective view and Fig. 3 is a schematic bottom-side perspective view of the wireless relay module 1, in which wiring is omitted. The wireless relay module 1 includes a module substrate 10, a BT relay section 11 (an example of a wireless relay section), a wire relay section 12, and a microphone 14. The BT relay section 11, the wire relay section 12 and the microphone 14 are mounted on the module substrate 10. The wireless relay module 1 may be attached to a console or the like, or embedded in a steering wheel or the like.

The BT relay section 11 has a function for handling communication with the BT communication section 22 of the communication device 2 through Bluetooth. The BT relay section 11 has a BT communication module 11a, antennas 11b, and a BT substrate 11c. The BT communication module 11a is provided for handling Bluetooth communication, and includes a memory medium for storing a Bluetooth software stack, a processor for processing the software stack, and the like. The BT communication module 11a is mounted on one side (top surface) of the BT substrate 11c.

The BT substrate 11c and the module substrate 10 are connected to each other through reflow soldering. More particularly, soldering bumps formed at a bottom surface of the BT substrate 11c and soldering paste applied to solder lands formed at a top surface of the module substrate 10 are brought into contact with each other, and then caused to pass through a reflow bath, thereby to solder the BT substrate 11c and the module substrate 10.

Meanwhile, the antennas 11b are provided in both sides of the BT substrate 11b. A cutaway portion 10a is formed at a portion of the module substrate 10 corresponding to the mounting position of the antennas 11b (see Fig. 3). Thus, as shown in Fig. 3, the antenna 11b formed at the bottom surface of the BT substrate 11c is exposed through the cutaway portion 10a when viewing the wireless relay module 1 from the bottom, as a result of which communication blocking through the antenna 11b formed at the bottom surface of the BT substrate 11c can be prevented.

A length of the antenna 11b (length along a shorter direction of the BT substrate 11c) is λ/4 in electrical length. The size of the module substrate 10 is λ/4 x λ/2, in electrical length. Those dimensions of the antenna 11b and the module substrate 10 determined in this manner can enhance a radiant efficiency of the antenna 11b. It should be noted that λ represents a wavelength in the medium of a radio wave (2.4 GHz) used in

Bluetooth communication.

On the other hand, the wire relay section 12 handles communication with the wire communication section 31 of the car audio system 3 through a USB cable 4 based on the USB standard. Referring to Fig. 2, the wire relay section 12 includes a USB connector 12a, and a USB circuit 12b connected to the USB connector 12a and the BT relay section 11.

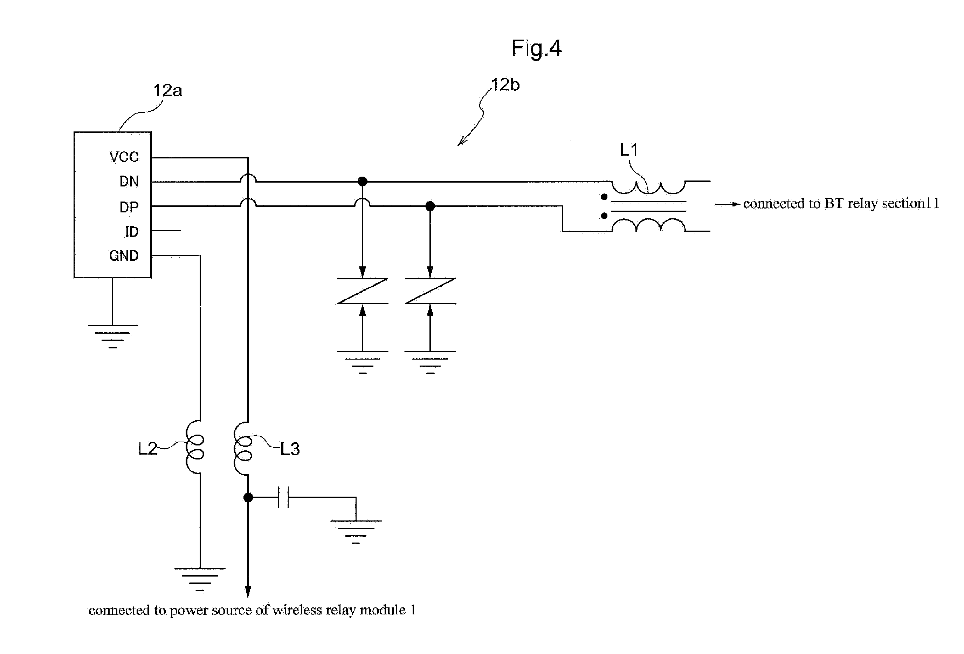

Fig. 4 is a circuit diagram for the USB circuit 12b shown with the USB connector 12a. The USB connector 12a according to the current embodiment is a micro-USB connector of general type including a power terminal VCC, a ground terminal GND, signal terminals DP and DN, an ID terminal ID, and the like. The signal terminals DP and DN are connected to the BT relay module through a first inductor L1. While the ground terminal GND is grounded through a second inductor L2, the power terminal VCC is connected to a power source of the wireless relay module 1 through a third inductor L3. As a result, power is supplied to the wireless relay module 1 from the car audio system 3.

The second inductor L2 and the third inductor L3 in the current embodiment are elements providing high impedance against a frequency band of wireless communication and low impedance against a frequency band of wire communication or direct current. The use of the second inductor L2 and the third inductor L3 having such characteristics reduces chances for the cable used in wire communication to pick up a radio wave of wireless communication. In other words, the wire communication is affected by the wireless communication less easily, which can reduce the noise of the wire communication. As a result, the cable for the wireless communication can be extended.

More specifically, according to the current embodiment, the second inductor L2 and the third inductor L3 are for 15 to 22 nHz. Such inductors provides high impedance against a signal of a frequency band of 2.4 GHz used in Bluetooth communication and providing low impedance against a signal of a frequency band of 12 MHz used in USB full-speed communication. More particularly, the use of such inductors can attenuate noise signals in Bluetooth communication without attenuating requisite data in USB communication, which can maintain a high S/N ratio in the USB full-speed communication between the wireless relay module 1 and the car audio system 3.

The second inductor L2 and the third inductor L3 constitute a noise suppressing section of the present invention.

Further, as shown in Fig. 1, the wireless relay module 1 according to the current embodiment has a voice data correcting section 13. The voice data correcting section 13 has a function for correcting voice data received from the communication device 2. Details of the voice data correction will be described later. The voice data correcting section 13 may be formed of a DSP (Digital Signal Processor) or the like. While the current embodiment uses the processor or the like for the BT communication module 11a, it is natural to employ any other DSP or the like for exclusive use for the voice data correction.

A flow of hands-free communication processing will be described hereinafter. In actual, processing such as A/D conversion, D/A conversion, modulation and demodulation for the voice data is required, details of which are omitted here because they are known.

### [Hands-free Communication: Replay of Incoming Voice]

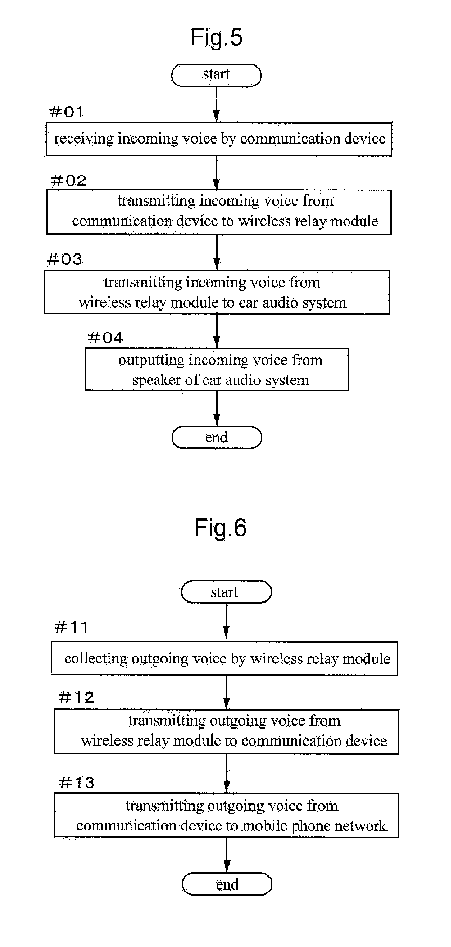

Fig. 5 is a flowchart of processing of incoming voice received from the other side. First, the incoming voice is received from the other side at the communication section 21 through the mobile phone network and the antenna 25 (#01). The received incoming voice is transmitted from the BT communication section 22 to the BT relay section 11 of the wireless relay module 1 through Bluetooth communication (#02). The incoming voice received at the BT relay section 11 is transmitted from the wire relay section 12 to the wire communication section 31 of the car audio system 3 through the USB cable 4 (#03). The received incoming voice is processed at the voice processing section 32 and outputted from the speaker 33 (#04).

### [Hands-Free Communication: Transmission of Outgoing Voice]

Fig. 6 is a flowchart of processing of transmitting outgoing voice of the user of the communication device 2. First, the outgoing voice of the user is collected by the microphone 14 of the wireless relay module 1 (#11). The collected outgoing voice is transmitted from the BT relay section 11 to the BT communication section 22 through Bluetooth communication (#12). The outgoing voice received at the BT communication section 22 is transmitted to the mobile phone network from the communication section 21 through the antenna 25 (#13).

The incoming voice or music that has been received may be outputted from the speaker 33 of the car audio system 3 during the above processing. In such a case, the output from the speaker 33 is collected by the microphone 14 of the wireless relay module 1 together with the outgoing voice. Such incoming voice or music is redundant for the other side, and may undesirably deteriorate the quality of communication when it is superimposed to the outgoing voice.

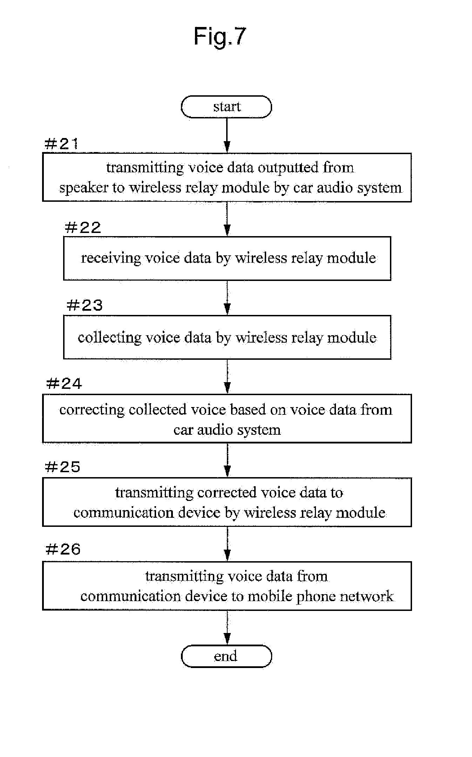

In view of the above, the wireless relay module 1 according to the current embodiment includes the voice data correcting section 13 described above. Signals from the microphone 14 and the wire relay section 12 are inputted to the voice data correcting section 13. A flow of voice correction processing will be described hereinafter based on a flowchart shown in Fig. 7.

When voice is outputted from the speaker 33, the voice processing section 32 of the car audio system 3 concurrently transmits data of the outputted voice to the wireless relay module 1 through the wire communication section 31 and the USB cable 4 (#21). On the other hand, the wireless relay module 1 receives the voice data from the car audio system 3 at the wire relay section 12 (#22), and the microphone 14 collects the voice outputted from the speaker 33 (#23). The voice data is inputted to the voice data correcting section 13.

The voice data correcting section 13 is configured to correct the data of the voice outputted from the speaker 33 and collected at the microphone 14 with the voice data acquired from the car audio system 3 (#24). For example, the voice data correcting section 13 subtracts the voice data acquired from the car audio system 3 from the data of the voice collected at the microphone 14. Where the voice data obtained from the car audio system 3 is expressed by f(t), the data of the voice outputted from the speaker 33 of the car audio system 3 and collected at the microphone 14 can approached by af(t+dt), in which "a" represents a scaling factor, "t" represents a time, and "dt" represents a micro time. Therefore, it is desirable to perform the above subtraction after correcting the voice data obtained from the car audio system 3 with a predetermined "a" and "dt." The values of "a" and "dt" can be determined in view of installing situations or operation environment of the hands-free system.

The voice data corrected in such a manner is transmitted to the communication device 2 from the BT relay section 11 (#25), and then to the other side (#26).

As described above, with the wireless relay module 1 according to the current embodiment, the wireless relay module 1 handles Bluetooth communication processing having relatively high throughput to transmit the processed signals to the car audio system 3 through USB communication, which can reduce processing load of the car audio system 3. More particularly, it is not required to equip the car audio system 3 with a high-performance processor. Therefore, the hands-free communication can be achieved with a car audio device such as a radio or the like with no processor or only a poor-performance processor.

Further, since the wireless relay module 1 of the current embodiment dispenses with a wireless communication function for the car audio system 3, it is not required to obtain authorization for wireless communication for the car audio system 3.

Still further, the voice output from the car audio system 3 is fed back to the wireless relay module 1, thereby to correct the voice data with high accuracy.

## Claims

1. A wireless relay module (1) relaying communication between a first device (2) and a second device (3), the module comprising:
a wireless relay section (11) handling wireless communication with the first device (2); and
a wire relay section (12) handling digital wire communication with the second device (3).

2. The wireless relay module (1) according to claim 1, wherein the wire relay section (12) includes a noise suppressing section (L2, L3) that attenuates a signal with a frequency band of the wireless communication without attenuating a signal with a frequency band of the digital wire communication.

3. The wireless relay module (1) according to claim 2, wherein the wire relay section (12) further includes a power terminal (VCC) and a ground terminal (GND), and
wherein the noise suppressing section (L2, L3) is connected to the power terminal (VCC) and the ground terminal (GND), respectively, and formed of inductance providing high impedance against the signal with the frequency band of the wireless communication and providing low impedance against the signal with the frequency band of the digital wire communication or a direct current signal.

4. The wireless relay module (1) according to any one of claims 1 to 3, further comprising a rectangular module substrate (10) on which the wire relay section (12) is arranged, the module substrate (10) having a lengthwise dimension and a widthwise dimension of λ/4 and λ/2 in electrical length relative to a wavelength λ in the module substrate (10) of a radio wave used in the wireless communication.

5. The wireless relay module (1) according to any one of claims 1 to 4, further comprising:
a microphone (14); and
a voice data correcting section (13),
wherein the wire relay section (12) is capable of receiving data of voice from the second device (3), the voice being about to be outputted from a speaker (33) of the second device (3), and
wherein the voice data correcting section (13) corrects the data of the voice outputted from the speaker (33) of the second device (3) and collected at the microphone (14) based on the voice data received from the second device (3).

6. A hands-free system comprising a voice output device (3), and a wireless relay module (1) relaying communication between the voice output device (3) and a communication device (2),
wherein the voice output device (3) includes a speaker (33) outputting voice, and a wire communication section (31) handling digital wire communication with the wireless relay module (1),
wherein the wireless relay module (1) includes:
a wireless relay section (11) handling wireless communication with the communication device (2);
a wire relay section (12) handling digital wire communication with the voice output device (3);
a microphone (14); and
a voice data correcting section (13) correcting data of voice collected at the microphone (14),
wherein, the voice output device (3) transmits the voice data to the wireless relay module (1) when the voice data is outputted from the speaker (33) as voice, and
wherein the voice data correcting section (13) corrects the data of the voice outputted from the speaker (33) and collected at the microphone (14) based on the voice data obtained from the voice output device (3).
